# EUROPEAN PATENT SPECIFICATION

(11) **EP 0 394 175 B1**
(45) Date of publication and mention of the grant of the patent: **15.12.1993**
(21) Application number: 90500030.3
(22) Date of filing: 27.03.1990
(51) Int. Cl.: E02B 3/06, E02B 3/12

(54) **Mound breakwater**
Wellenbrechende Seeschutzanlage
Brise-lames à talus incliné

(30) Priority: 06.04.1989 ES 8901204
(43) Date of publication of application: 24.10.1990
(73) Proprietor: UNIVERSIDAD POLITECNICA DE VALENCIA, 46022 Valencia (ES)
(72) Inventor: Medina Folgado, Josép Ramón, E-46022- Valencia (ES)
(74) Representative: Gomez-Acebo y Pombo, José Miguel

(56) References cited:
- FR-A- 2 582 693
- CRAEJER et al.: "Engineering for Dams", vol. III: "Earth, rock-fill, steel and timber dams", 1945, pages 783-787, Chapman & Hall, London, GB
- T. HUITEMA: "Dijken langs zee, rivieren en kanalen. Kaden om polders,droogmakerijen enz.", 1947, page 40, N.V. Uitgeversmaatschappij Kosmos, Amsterdam, NL

## Description

The invention is related to the field of mound breakwaters and rubble-mound breakwaters, which are constructions designed to provide sheltering to specific coastal zones. More specifically, the purpose of the invention is to introduce improvements into the commonly named "armour" of mound breakwaters. Said improvements provide the armour with an internal reinforcement which gives the structure a higher reliability and resistance.

Mound breakwaters are coastal structures built with concrete units and quarrystones of different sizes. Said breakwaters are built in the sea in order to shelter a coastal area. The basic elements of the mound breakwater are: core, filter layers, armour with (or without) a cap on the crest of the breakwater.

Said coastal structure causes the sea waves to break on the armour and, subsequently, to reflect low energy.

The core is the main part of the mound breakwater and is the largest volume structural element. The core is designed to resist the geotechnical conditions imposed by the sea bed, the concrete cap, the armour and the other layers of the breakwater. Additionally, the core should be impervious enough to prevent an excessive wave transmission through the breakwater and it should also satisfy the hydrodynamic conditions of the sea waves inside the breakwater structure.

The filter layers, one or several layers of stones of decreasing sizes from the armour to the core and sea bed, are placed on the external surface of the core. Their function is to prevent the loss of smaller breakwater materials through openings of the armour or large stone layers.

The armour, the external part of the breakwater, is placed on the filter layers. The armour, a layer which protects the breakwater structure from the breaking waves, is made of larger units.

A concrete cap, designed to reduce the wave overtopping, may be placed on the breakwater crest.

The armour is the basic resistant element of the mound breakwater and is characterized by the type of armour unit it is made of (shape, density, average weight, gradation, resistance, etc.) and by the characteristics of the breakwater section.

Having herein defined what is a mound breakwater, it is important to point out the three basic types of mound breakwater in existence.
1.- The mound breakwaters of "classic design".
2.- The "S shaped" breakwaters also called mound breakwaters of the "broken profile" type.
3.- The "Berm type" breakwaters, also called "sacrificial type" breakwaters, or "reshaping" mound breakwaters.

The mound breakwaters of classic design (e.g. see FR-A-2 582 693) have an armour of uniform slope to the crest (with or without cap). In these breakwaters of classic design, the armour thickness is approximately invariable along the slope. This armour thickness is usually twice the equivalent cube size, or nominal diameter; although this may vary depending on the type of armour unit. Equivalent cube size, or nominal diameter, is the cubic root of the average weight divided by the density of the armour units.

The mound breakwaters of classic design offer low permeability. One of their drawbacks is that if the sea wave storm overpasses the initiation of damage threshold level, and the damage progresses into the armour, the permeability of the breaking zone is drastically reduced.

The S shaped breakwaters have a nonuniform profile because the slope is steeper in the central part and smoother in the upper and lower parts. This composite profile looks like an "S". Therefore the denomination used is "S shaped" breakwater.

The S shaped breakwaters also have an armour with approximately uniform thickness. In comparison with the conventional breakwaters, the special profile of the S shaped breakwaters gives them a higher degree of resistance, although with the disadvantage of needing larger volume of materials for construction. The S shape does allow, though, for the reduction of the weight of the units of the armour, if one considers the same design wave storm for the initiation of damage, and the corresponding cost reduction.

However, the S shaped breakwaters are difficult to build because of the special required profile.

The third mound breakwater type, the "Berm type" breakwater, has armour with a very large volume in the first construction, although the stones of the armour are much lighter than those of the conventional rubble-mound breakwaters.

On the other hand, in the "Berm type" breakwaters, the action of the sea waves is progressively forming the armour until the definitive stability is obtained. The denomination "reshaping" mound breakwaters refers to this process.

The principal advantages of the "Berm type" breakwaters are the feasibility of building with mechanical equipment and the large volume of materials in the armour layer that are adapted to the local sea wave conditions after the attack of storms.

However, the "Berm type" breakwaters require a good deal more material to build the first armour, and their long term reliability is low.

The improvements, which are the purpose of the invention, have been developed to solve the problems and inconveniences generated by the different types of existing mound breakwaters, and, additionally, to offer the advantages shown by those breakwaters.

The improvements are made on the armour, which is to say on the basic structural element of the breakwater.

Specifically the improvements are based on a significant increase in the thickness of the armour in the zone where the mean sea level crosses the frontal armour profile. This variable armour thickness will maintain the uniform slope of the external armour profile, which is similar to the conventional breakwater. Therefore the purpose of the invention is to increase the thickness of the armour layer, but only the internal part; that is to say, the invention keeps the external profile the same as that of conventional breakwaters, but, at the same time, it makes the internal profile of the armour in a concave shape facing the sea, precisely in the zone of intersection of the mean sea level and the armour. The resulting thickness in said zone is therefore significantly larger.

As a consequence of the larger thickness, the internal profile of the armour may be of a variety of shapes: angular, approximately trapezoidal, curved, etc.

The above mentioned thickness of the armour makes it a different structure in comparison with the armour of the conventional breakwaters. This altering of a conventional structure is extremely easy to carry out and it introduces a significant change in structural behaviour with regards to the sea wave storms by increasing its resistance.

The following steps explain the advantages of a breakwater built with the new armour profile in accordance with the improvements of the invention, with respect to the known mound breakwaters.

Compared to the conventional breakwaters, the breakwater built in accordance with the improvements of the invention shows the following advantages:

A higher permeability of the breakwater is found in the zone where the waves break. This is because the armour thickness is greater, and consequently, the stability of the armour units is higher, especially if the core and filter layers have low permeability. This allows for the reduction of the weight of the armour units, and the corresponding reduction of construction costs, while mantaining the same resistance to the initiation of damage.

A slow reduction of the permeability in the zone of the armour where the waves break is noted, when the sea waves overpass the threshold level of the initiation of damage and the damage progress in the armour. This gives the breakwater a resistance level quite superior to the total failure by exposition of the internal filter layers and posterior collapse of the structure.

The breakwater, in accordance with the invention, may be used in areas where the uncertainties of the design load factors are important (waves without depth-limiting condition). The wide range of wave storm intensities which the structure is able to resist between the initiation of damage and the total failure, by exposition and loss of the internal layers of the breakwater, gives the breakwater the advantage of being adequate for areas where the uncertainties of the design load factors are notable. At low damage levels, the breakwater has a behaviour similar to that of a conventional breakwater; while, at high damage levels, the mound breakwater, built in acordance with the invention, has a behaviour similar to that of the "S shaped" breakwater, with its resistance to the total failure increased far beyond that of the conventional breakwater.

On the other hand, the wide range of wave storm intensities able to be resisted is a unique design property and, as mentioned above, it is a very valuable attribute for building breakwaters under uncertain design factors.

With respect to the S shaped breakwater the breakwater, in accordance with the invention offers the following advantages:

The volume of materials necessary for the construction is lower and, as a result, the cost is lower, because the external profile is uniform while the internal profile only shows the upper half of an S shape.

With the same weight of the armour units and volume of materials, the mound breakwater, in accordance with the invention, having the internal reinforcement of armour, offers a higher level of resistance to the total failure, because, in the process of erosion of the armour, the profile changes and the armour units are compacted.

By using the same weight of the armour units, the initiation of damage commences before, and the flexibility of the structure is quite superior. This reduces the economic impact of the uncertainties of the design factors on the breakwaters. As a result, the possibilities of sudden collapse of the structure is reduced and, therefore, it increases the possibilities of reinforcing the breakwaters, with satisfactory conditions, should the breakwater have been originally underdesigned.

A higher feasibility of construction and control.

Finally, compared to the "Berm type" breakwater, the mound breakwater, in accordance with the invention, shows the following advantages:

Movements of the armour units are minimized. The problem of transporting materials along the breakwater, as found in the case of the "Berm type" breakwater, is therefore eliminated.

The required volume of materials is much lower.

The monitoring of the works and construction is much easier. The identification of the damage levels is very simple and the long term stability is reliable. This is not verified by the "Berm type" breakwaters, which are designed to adapt the external profile, in accordance with the storm intensity, and eventually to achieve long term stability.

In summary the change in the mound breakwater structure, in accordance with the improvements of the invention, significantly affects the structural behaviour by substantially increasing its resistance to the total failure. On the other hand, the resistance to the initiation of damage is also slightly increased. This behaviour gives the mound breakwaters a flexibility in their response quite superior to the existing breakwater designs previously described. The invention is useful in cases of breakwater exposed to design wave storms with high uncertainty and in the cases in which a possible total failure of the breakwater structure may cause important economic losses.

The new mound breakwater design is valid for all types of armour units, with or without cap on the crest. However, the utility of the invention is maximum with robust armour units (quarrystones, blocks, etc.) and mound breakwaters under high design uncertainties and important economic losses in the case of total failure of the breakwater (deep areas).

Additionally, the fact of the increasing of the armour thickness in the zone of contact of the mean sea level with the external breakwater profile gives the breakwaters the greater part of the best properties of those mound breakwaters in existence.

In short, a mound breakwater built in accordance with the improvements of the invention is as easy to construct and to monitor as the conventional mound breakwater of classic design; and it is more resistant than an "S shaped" breakwaters in the vicinity of the total failure point. Additionally, it is adjustable but much more stable than the "Berm type" breakwater, and it provides the whole structure with a maximum flexibility. That flexibility is quite valuable in those cases of it being necessary to assure large uncertainties in the design wave storm.

In order to complete the description of the proposed mound breakwater type and to contribute to a better inderstanding of the characteristics of the invention, a set of figures is used to illustrate, and not to limit the invention. Said figures serve as part of this specification, and have the following elements represented:

Figure 1: shows a section of a schematic representation of a mound breakwater built with the improvements of the invention, i.e., with a larger armour thickness, which constitutes the reinforcement. This reinforcement is in accordance with the internal profile of the armour, and, in the detail (corresponding to the circle) the basic constitution of this armour, the filter layers and the core are shown.

Figure 2: shows another view, similar to the previous one, in which the reinforcement, constituted by the zone with larger armour thickness, varies with respect to the profile corresponding to the reinforcement shown in figure 1.

Figures 3 and 4: show different views of the section and/or plan of schematic representations of a breakwater with cap on the crest, where the reinforcement or larger armour thickness is shown as a concave curve.

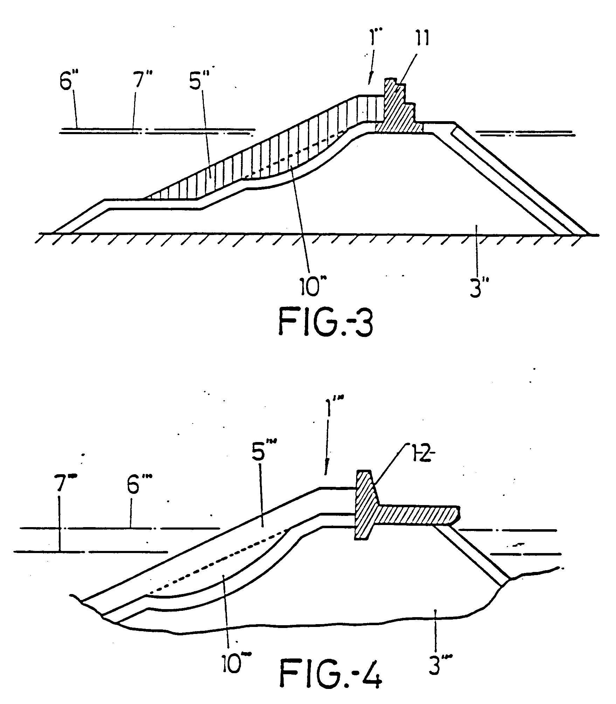

In the four previously referred to figures, one can see that the invention, the breakwater obtained using the claimed improvements, varies from figure to figure in the reinforcement profile. The figures differ in the reinforcement profile where the armour thickness increases. The breakwaters in the two first figures do not incorporate a cap, while the breakwaters of the figures 3 and 4 have a cap. The cap is a conventional element and may be incorporated or not in the mound breakwater.
What is fundamental and new in the invention is the reinforcement of the armour as is heretofore described:

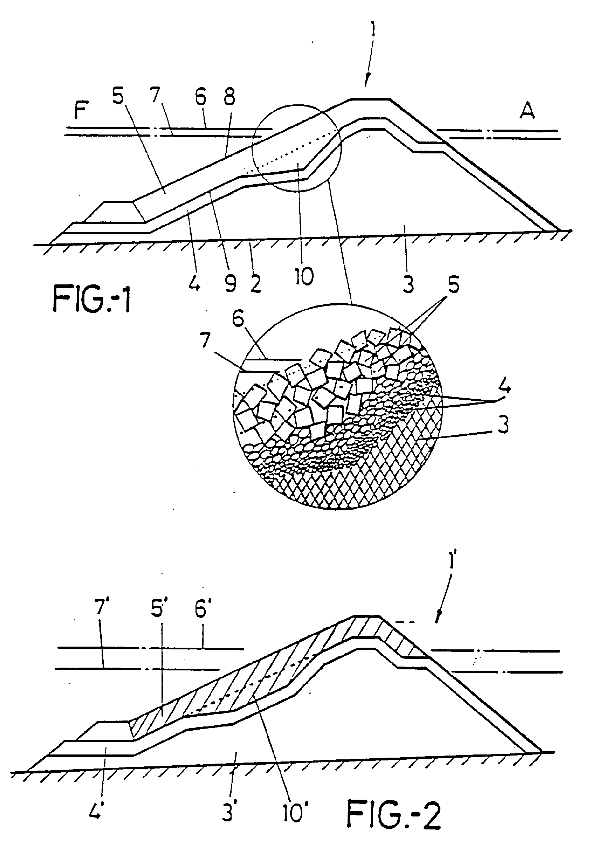

In figure 1, one can see a general mound breakwater (1), placed on a sea bed (2). This breakwater shows a frontal zone, indicated as "F zone", on which the waves would break, and a sheltered zone, indicated as "A zone", which is logically the sheltered zone with respect to those breaking waves.

In figure 1, the breakwater (1) includes the corresponding core (3), whose structure and utility have been previsiously shown, and on which the filter layers (4) are placed.

On said filter layers (4) is placed the armour (5), which is made by one or several layers of a variety of materials, to protect the general breakwater structure from the breaking waves.

Figure 1 shows the maximum and minimum mean sea levels (6) and (7), which are the levels of high tide (6) and low tide (7).

What is new about the invention is that the armour (5) offers a uniform slope in the external profile (8), while the internal profile (9) offers a greater thickness (10) in relation to the zone where the mean sea level crosses the frontal slope of the breakwater. The thickened zone or zone with a larger thickness (10), constitutes a reinforcement of the armour and, in consequence, gives the breakwater (1) a higher resistance and stability, as has already been shown in this specification.

In figure 1 said reinforcement (10) of angular configuration has been represented.

Figure 2 shows a breakwater (1') with similar characteristics to that which has already been described and shown in figure 1. It shows the corresponding core (3'), filter layers (4'), armour (5') and reinforcement (10'), and offers, in this case, an approximately trapezoidal profile. In figure 2 one can see a longer tidal range, i.e., a large distance between the levels of high tide (6') and low tide (7').

In these two figures, 1 and 2, one can see the breakwater without cap.

Figures 3 and 4 show two analogous breakwaters (1'' and 1'''), varying in the amplitude of their reinforcement (10'') and (10'''), and in the configuration of their cap (11 and 12) because said breakwaters (1'' and 1''') have an incorporated cap in this case.

The internal profile of the reinforcement (10'' and 10''') of said breakwaters is a concave curve facing the sea. The remaining elements are referred to in a manner similar to the previously described case, where the cores have the numbers (3'') and (3''') respectively. The armours have (5'') and (5''') and the mean sea levels have (6''-7'') and (6'''-7'''). As in the case of figure 1, as well as in the later two figures, 3 and 4, and figure 2, the frontal and sheltered zones of the breakwater will be exactly the same.

In summary, what the breakwater has actually incorporated as new is the corresponding armour (5-5'-5''-5'''), which shows its superior profile or slope to be totally uniform, while its internal profile is affected by an increase of thickness which constitutes a reinforcement (10-10'-10''-10''') respectively. This gives the structure a higher resistance and reliability. Said increase of thickness, or the reinforcement which determines it, is established in correspondence with the zone where the mean sea levels, depending on the tide, cross the external profile of the armour.

It is considered not necessary to extend this description further for experts in the field to understand the implications of the invention and the advantages derived from it.

The materials, shapes, sizes and disposition of elements may vary if they do not alter the essence of the invention.

## Claims

1. A mound breakwater (1) constituted by a core(3), as the main part, some filter layers(4) covering the core(3), and an armour layer(5) protecting the overall structure from the breaking waves, wherein such armour(5) shows an external profile(8) of substantially uniform slope, and which is characterized by an internal profile(9) of the armour(5) which shows a zone with a greater thickness(10) between the external(8) and the internal(9) profiles, the internal profile having a convex shape towards the core in the zone where the mean sea levels(6 and 7) cut the external profile(8) of the armour(5).

2. A mound breakwater according to Claim 1, characterized by the convex reinforcement(10) of the armour(5) having a triangular cross section.

3. A mound breakwater according to Claim 1, characterized by the convex reinforcement(10') of the armour(5') having a trapezoidal cross section.

4. A mound breakwater according to Claim 1, characterized by the convex reinforcement(10'',10''') of the armour(5'',5''') having a curved segment shape cross section.

## Patentansprüche

1. Ein Wellenbrecherdamm (1), bestehend aus einem Kern (3) als Mittelteil; Filterschichten (4), die diesen Kern (3) überdecken, und einem Hauptmantel (5), der den Dammkörper gegen das Wellenbrechen schützt und eine Böschung vorweist, dessen Aussenprofil (8) gleichförmig ist, dadurch gekennzeichnet, dass das Innenprofil (9) des Hauptmantels (5) eine Zone mit einer dickeren Stärke beinhaltet, die eine Verstärkung konvexer Gestaltung in Richtung auf den Damm darstellt, entsprechend der Zone in der die Meeresspiegel (6 und 7) das Aussenprofil (8) des Hauptmantels (5) schneiden.

2. Ein Wellenbrecherdamm nach Anspruch 1, dadurch gekennzeichnet, dass die konvexe Verstärkung (10) des Hauptmantels (5) einen dreieckigen Querschnitt besitzt.

3. Ein Wellenbrecherdamm nach Anspruch 1, dadurch gekennzeichnet, dass die konvexe Verstärkung (10') des Hauptmantels (5') einen trapezförmigen Querschnitt besitzt.

4. Ein Wellenbrecherdamm nach Anspruch 1, dadurch gekennzeichnet, dass die konvexe Verstärkung (10''.10''') des Hautpmantels (5'',5''') einen Querschnitt in Form eines gebogenen Segments besitzt.

## Revendications

1. Une digue brise lames (1) constituée par un noyau (3) comme partie centrale;des couches de filtre (4) qui couvrent ce noyau(3); et une couche principale (5) qui protège le corps de la digue de la brisure des vagues et qui présente un talus dont le profil externe (8) est uniforme, caractérisée en ce que le profil interne (9) de la couche principale (5) contient une zone de plus grande épaisseur (10) qui représente un renforcement à configuration convexe vers la digue en correspondance avec la zone où les niveaux de la mer (6 et 7) coupent le profil extérieur (8) de la couche principale.

2. Une digue brise lames selon la revendication 1, caractérisée en ce que le renforcement convexe (10) de la couche principale (5) est pourvu d'une section transversale triangulaire.

3. Une digue brise lames selon la revendication 1, caractérisée en ce que le renforcement convexe (10) de la couche principale (5) est pourvu d'une section transversale trapézoïdale.

4. Une digue brise lame selon la revendication 1, caractérisée en ce que le renforcement convexe (10''. 10''') de la couche principale (5''.5''') est pourvu d'une section transversale en forme de segment courbé.
